(19) Europäisches Patentamt

European Patent Office

Office européen des brevets

(11) **EP 1 598 577 A2**

(12) **EUROPEAN PATENT APPLICATION**

(43) Date of publication:
**23.11.2005 Bulletin 2005/47**

(51) Int Cl.$^7$: **F16H 61/28**

(21) Application number: **05291076.7**

(22) Date of filing: **19.05.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | (72) Inventors:<br>• **Osamura, Kensuke, c/o Calsonic Kansei Corporation**<br>**Tokyo 164-8602 (JP)**<br>• **Hirota, Yukitsugu,c/o CALSONIC KANSEI CORPORATION**<br>**Tokyo 164-8602 (JP)** |
| (30) Priority: **21.05.2004 JP 2004152333** | |
| (71) Applicant: **Calsonic Kansei Corporation**<br>**Tokyo 164-8602 (JP)** | (74) Representative: **Intes, Didier Gérard André et al**<br>**Cabinet Beau de Loménie,**<br>**158, rue de l'Université**<br>**75340 Paris Cedex 07 (FR)** |

(54) **Operating position select device for automatic transmission**

(57)    An operating position select device (100) includes a select lever unit (1) having a select lever (2), an operating position sensor (51) detecting an operating position of the lever (2), a mode shift unit (300) of an automatic transmission (19), a shift position sensor (200) detecting a shift position of the mode shift unit (300). A mechanically connecting means (8a, 8b, 18, 80) connects the lever (2) and the mode shift unit (300).

A control unit (20) controls an assist actuator (9) arranged between the lever (2) and the mode shift unit (300) for assisting the lever (2). The connecting means (8a, 8b, 18, 80) has a torque transmittable adjuster (80) at its intermediate part, and it has play for changing its length and an elastic member (8e, 8f) disposed into the play so as to transmit force through the torque transmittable adjuster (80).

## FIG. 1

EP 1 598 577 A2

**Description**

The present invention relates to an operating position select device for an automatic transmission by which a driver can select by operating a select lever one of select mode positions corresponding to a plurality of operation modes of the automatic transmission.

An operating position select device for an automatic transmission of this kind is disclosed in Japanese patent laying-open publication (Tokkaihei) No. 9-323559. This select device includes a select lever unit disposed near a driver's seat in a passenger compartment and a mode shift unit mounted on an automatic transmission. The select lever unit has a select lever manually operated by a driver and is connected with the mode shift unit by a connecting mechanism, such as a control cable, or a connecting linkage, which transmits an operating force applied on the select lever by the driver to the mode shift unit to shift operation modes of the automatic transmission.

The conventional art, however, has a problem that the select lever unit needs a long select lever in order to operate it without a large operating force of the driver, which reduces design freedom concerning an installation location of the select lever unit and/or a layout of a passenger compartment.

This reason comes from the fact that a length of the select lever is determined so that a driver can easily operate the select lever and its operating torque must overcome frictional resistance of the connecting mechanism and the like. Namely, the operating torque, generated by the operating force on the select lever, has to be larger than torque caused by the sum of the frictional resistance in the connecting mechanism and resistance generated when a detent pin, which moves with the select lever, gets over a cam top portion of a detent plate during select operation, although the operating force of the driver is limited to a certain extent. Accordingly, to satisfy both of the above requirements the select lever needs to be longer than a certain length, typically to be 350 mm.

Another operating position select device for an automatic transmission of this kind is disclosed in Japanese patent laying-open publication (Tokkai) No. 2003-97694. This select device is, what is called, a shift-by-wire type one. It has a select lever manually operated by a driver, a select position detector for detecting a position of the select lever, a mode shift unit mounted on an automatic transmission for shifting its operation modes, an electric motor for driving a mode shift unit, and a control unit for controlling the electric motor based on an output signal from the detector.

This select device is suitable for shortening a length of the select lever and expanding design freedom for its installation location and/or layout of a passenger compartment, while the select device lacks a mechanical connection between the select lever and the mode shift unit. This lack of the mechanical connection results in a problem that the mode shift unit can not be sifted despite of operating the select lever in case of electrical failure such that an electric wire is broken, or the select position detector or the control unit fails.

It is, therefore, an object of the present invention to provide an operating position select device for an automatic transmission which overcomes the foregoing drawbacks and can expand design freedom concerning layout of a passenger compartment and/or an installation location of a select lever unit, and drive a mode shift unit despite of electric failure of the operating position select device.

According to the first aspect of the present invention there is provided an operating position select device for an automatic transmission whose operation modes are shiftable, the operating position select device comprising: a select lever unit having a select lever that is operated by a driver between a plurality of select positions corresponding to the operation modes; an operating position sensor that detects an operating position of the select lever and outputs an operating position signal; a mode shift unit mounted on the automatic transmission to shift operation modes of the automatic transmission; a shift position sensor that detects a shift position of the mode shift unit and outputs a shift position signal; a mechanically connecting means that mechanically connects the select lever and the mode shift unit with each other; an assist actuator that is arranged between the select lever and the mode shift unit and supplies assist force to the select lever; and a control unit that controls the assist actuator, wherein the mechanically connecting means has a torque transmittable adjuster at an intermediate part thereof, the torque transmittable adjuster having play for changing a length thereof and an elastic member disposed into the play so as to transmit force through the torque transmittable adjuster.

The objects, features and advantages of the present invention will become apparent as the description proceeds when taken in conjunction with the accompanying drawings, in which:

FIG. 1 is a schematic diagram showing a structure of an automatic transmission with an operating position select device of a first embodiment according to the present invention;

FIG. 2 is an enlarged perspective view showing an assist actuator that is used in the operating position select device shown in FIG. 1;

FIG. 3 is an enlarged perspective view showing a mode shift unit that has a detent mechanism and is used in the operating position select device shown in FIG. 1;

FIG. 4 is a control bock diagram of a control unit and its peripheral equipment that are used in the operating position select device shown in FIG. 1;

FIG. 5 is a flowchart of an assist process executed in the control unit shown in FIG. 4 for controlling the assist actuator during a select operation;

FIG. 6 is a characteristic diagram showing relationships of operating reaction force acting on a select lever and a cam profile of a detent mechanism with respect to an operating angle of the select lever, when the select lever is shifted from a P position to an R position without assist force outputted from the assist actuator;

FIG. 7 is a characteristic diagram showing a target operating reaction force and the operating angle, when the select lever is shifted from a P position to an R position;

FIG. 8 is a characteristic diagram showing a target position variation map used in a target position variation setting part of the control unit when the select lever is shifted in a direction from the P position to an L position or in its opposite direction;

FIG. 9 is a schematic diagram illustrating behavior of the select lever, control cables, and a manual plate lever in different select positions;

FIG. 10 is a control bock diagram of a control unit and its peripheral equipment that are used in an operating position select device 0f a second embodiment according to the present invention;

FIG. 11 is a flowchart of an assist process executed in the control unit shown in FIG. 10 for controlling an assist actuator;

FIG. 12 is a characteristic diagram showing a second motor torque command value map used in a second motor torque calculating part of the control unit when a select lever is shifted in a direction from the P position to an L position or in its opposite direction;

FIG. 13 is a control bock diagram of a control unit and its peripheral equipment that are used in an operating position select device 0f a third embodiment according to the present invention;

FIG. 14 is a flowchart of an assist process executed in the control unit shown in FIG. 13 for controlling an assist actuator;

FIG. 15 is a schematic diagram illustrating behavior of the select lever, control cables, and a manual plate lever in a state where deformation of a force transmittable adjuster does not cause, in a state where it causes due to heat generated during operation for example, and in a state where it is eliminated by assist control, when the select lever 2 is positioned in certain select position;

FIG. 16 is a control bock diagram of a control unit and its peripheral equipment that are used in an operating position select device 0f a fourth embodiment according to the present invention; and

FIG. 17 is a flowchart of an assist process executed in the control unit shown in FIG. 13 for controlling an assist actuator.

Throughout the following detailed description, similar reference characters and numbers refer to similar elements in all figures of the drawings, and their descriptions are omitted for eliminating duplication.

An operating position select device of a first preferred embodiment according to the present invention will be described with reference to the accompanying drawings.

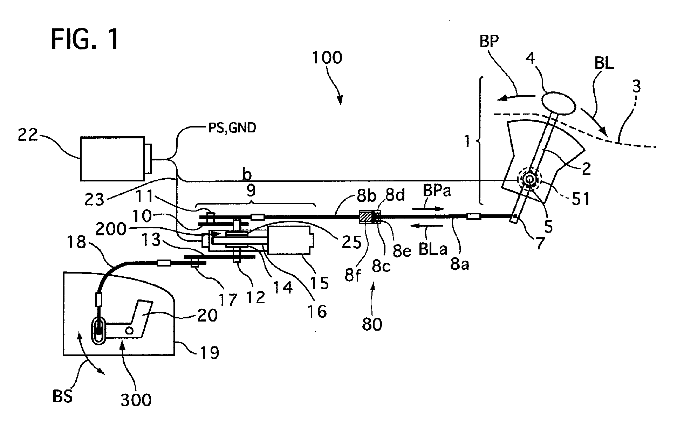

Referring to FIG. 1 of the drawing, there is shown an automatic transmission 19 and an operating position select device 100 to control the transmission 19.

The automatic transmission 19 is a conventional multi-speed transmission with a plurality of planetary gear sets, not shown, and is operatable among a plurality of operation modes, for example, a parking mode, a reverse drive mode, a neutral mode, a forward drive mode, and a forward low gear drive mode.

The automatic transmission 19 is provided with the operating position select device 100, which shifts the operation modes to a desired operation mode by manually selecting a select lever 2 of the select device 100.

The operating position select device 100 includes a select lever unit 1 manually operated by a driver, an mode shift unit 300 mounted on the automatic transmission 19, a first, second, and third control cables 8a, 8b, and 18 connecting the select lever 2 to the mode shift unit 300, an operating angle sensor 51 for detecting an operating angle of the select lever 2, an assist actuator 9 for assisting operating force inputted from the select lever 2 by the driver, a shift position sensor 200 for detecting a shift angle of , and a control unit 22 for controlling the assist actuator 9.

The select lever unit 1 is arranged, for example, at a center console 3 beside a driver's seat and has the select lever 2 operated by the driver, a bracket 5 fixed to a vehicle body, a supporting shaft 5a fixed on the bracket 5 so as to swingably support the select lever 2, and a knob 4 mounted on the top of the select lever 2 so as to be held by a hand of the driver.

The select lever 2 is set to be approximately 100 mm in length in this embodiment, which is shorter by approximately 250 mm than a conventional type select lever. The lever 2 is operatable by the driver swingably in a first direction toward a P position as indicated by an arrow BP and in a second direction, opposite to the first direction, toward an L position as indicated by an arrow $B_L$.

The select lever 2 can be positioned in one of select positions: the P position corresponding to the parking mode of the automatic transmission 19, an R position corresponding to the reverse drive mode, an N position corresponding to the neutral mode, a D position corresponding to the forward drive mode, and the L position corresponding to the forward low geared drive mode.

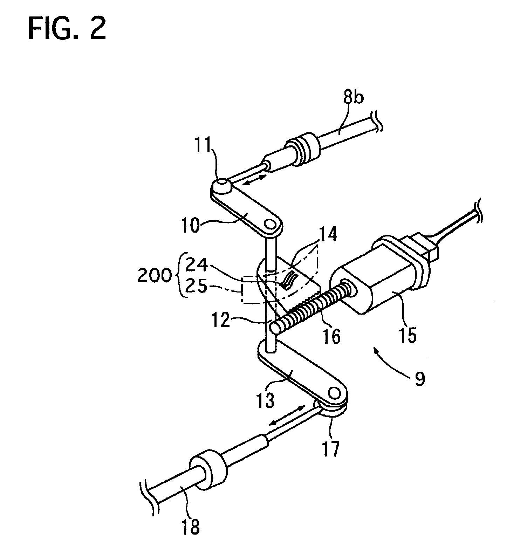

The assist actuator 9, as shown in FIGS. 1 and 2, includes an electric motor 15 with reduction gears for reducing rotation speed of an output shaft of the motor 15, a worm 16 formed on the outer peripheral surface of the output shaft, and a worm wheel 14 meshing with the worm 16 and integrally united to the coupling shaft 12 for coupling the second and third control cables 8b and 18.

The worm wheel 14 is provided on its upper surface with an electric terminal 24 contacting to a carbon resistor 25, indicated by a dashed line in FIG. 2, that is printed on a substrate fixed to a case of the assist actuator 9. The electric terminal 24 and the carbon resistor 25 constitute the shift angle sensor 200 for detecting a shift angle of a manual plate lever 20 mounted on the automatic transmission 19 to output a shift angle signal to the control unit 22.

The electric terminal 24 is movable together with and around the coupling shaft 12 to change its position with respect to the carbon resistor 25 that is immobile, so that the shift angle sensor 200 can detect a rotating angle of the coupling shaft 12, substantially corresponding to the shift angle of the manual lever 20, and output the shift angle signal. The shift angle in the P position is set to a base angle, and the shift angle sensor 200 detects shift angle with respect to the base angle. The shift angle signal is set to increase as the select lever 2 moves toward the L position, in the second direction $B_L$. The shift angle sensor 200 acts as a shift position sensor of the present invention, and the shift angle signal corresponds to a shift position signal of the present invention.

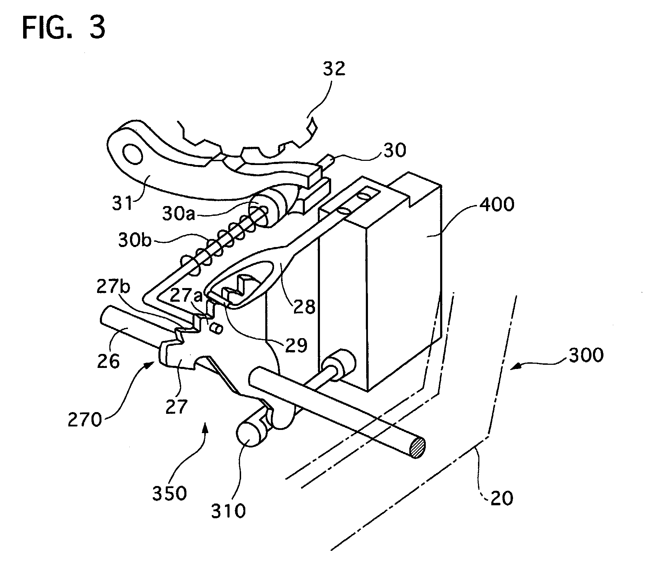

The mode shift unit 300 shifts the operation modes of the automatic transmission 19 according to an operated position of the select lever 2. Referring to FIGS. 1 and 3 of the drawings, the mode shift unit 300 has the manual plate lever 20 and a detent mechanism 350 for keeping the manual plate lever 20 in a position selected by the select lever 2.

The manual plate lever 20 is integrally fixed in its intermediate portion with a rotary shaft 26, and connected at its one end portion with the third control cable 18 so as to be rotated on the shaft 26 with respect to a transmission case of the transmission 19 according to a select operation of the select lever 2. The rotary shaft 26 is fixed to a detent plate 27 of the detent mechanism 350.

The detent mechanism 350 includes the detent plate 27 with a cam 270, a detent pin 29 to be pressed onto the cam 270, and a spring plate 28 acting its spring force on the detent pin 29.

The detent plate 27 is mechanically connected with a valve spool 310 of a manual valve disposed in a control valve unit 400 of the automatic transmission 19 so as to move the spool 300 according to a select position. The detent plate 27 is formed on its upper portion with the cam 270 having top portions 27a and bottom portions 27b. Each bottom portion 27b is arranged between the adjacent top portions 27a and corresponds with one of the five operation modes of the automatic transmission 19.

The cam 270 is pressed by the detent pin 29 that is urged by the spring plate 28. The spring plate 28 is mounted at its one end portion on the control valve unit 400 and supports the detent pin 29 at its other end portion. The spring plate 28 presses the detent pin 29 onto the cam 270 of the detent plate 27 so that the detent pin 29 is positioned in one of the bottom portions 27b to detain the valve spool 310 of the manual valve in the selected position.

The detent plate 27 is coupled at its cam side portion with a parking rod 30 having a wedge 30a that can press a parking pawl 31. The wedge 30a is movable along the rod 30 and presses the parking pawl 31 by spring force of a coil spring 30b so that the pawl 31 engages with a parking wheel 32 united to an output shaft of the automatic transmission 19 when the select lever 2 is shifted to the P position. This engagement of the pawl 31 and the wheel 32 results in locking drive wheels, not shown, for parking a motor vehicle.

The mode shift unit 300 is mechanically connected with the select lever 2 through the first, second and third control cables 8a, 8b, and 18, and others.

As shown in FIGS. 1 and 2, the first control cable 8a connects at its one end portion with a bottom portion of the select lever 2 through a first joint 7 and at the other end portion with a piston 8c movable in a cylinder 8d connected with an one end portion of the second control cable 8b.

The second control cable 8b is connected with one end portion of an input lever 10 through a second joint 11. The other end portion of the input lever 10 is connected with a top portion of a coupling shaft 12, whose bottom portion is connected with one end portion of an output lever 13. The other end portion of the output lever 13 is connected with one end portion of the third control cable 18 through a third joint 17. The other end portion of the second control cable 18 is, as shown in FIGS. 1 and 3, connected with the manual plate lever 20.

The cylinder 8d contains a first elastic member 8e at a select lever side of the piston 8c and a second elastic member 8f at a manual plate lever side of the piston 8c. The first and second elastic members 8e and 8f are made of rubber in this embodiment. The piston 8c is designed so that it can move forward and backward in the cylinder 8d a distance larger than primary play and/or deformation of the control cables 8a and 8b, the first and second joints 7 and 11, and the others. The piston 8c, the cylinder 8d, and the first and second elastic members 8e and 8f constitute a force transmittable adjuster 80.

The first, second and third control cables 8a, 8b and 18, the force transmittable adjuster 80, the first to third joints 7, 11, and 17, the input and output plates 10 and 13, and the coupling shaft 12 act as a mechanically connecting means of the present invention.

The control unit 22 is electrically connected to a power supply PS, ground GND, the operating angle sensor 51, and the shift angle sensor 200. The control unit 22 receives the operating angle signal from the operating angle sensor 51 and the shift angle signal from the shift angle sensor 200 so as to compute target assist current based on these signals, and drives the electric motor 15 under pulse width modulation (PWM) control based on the target assist current.

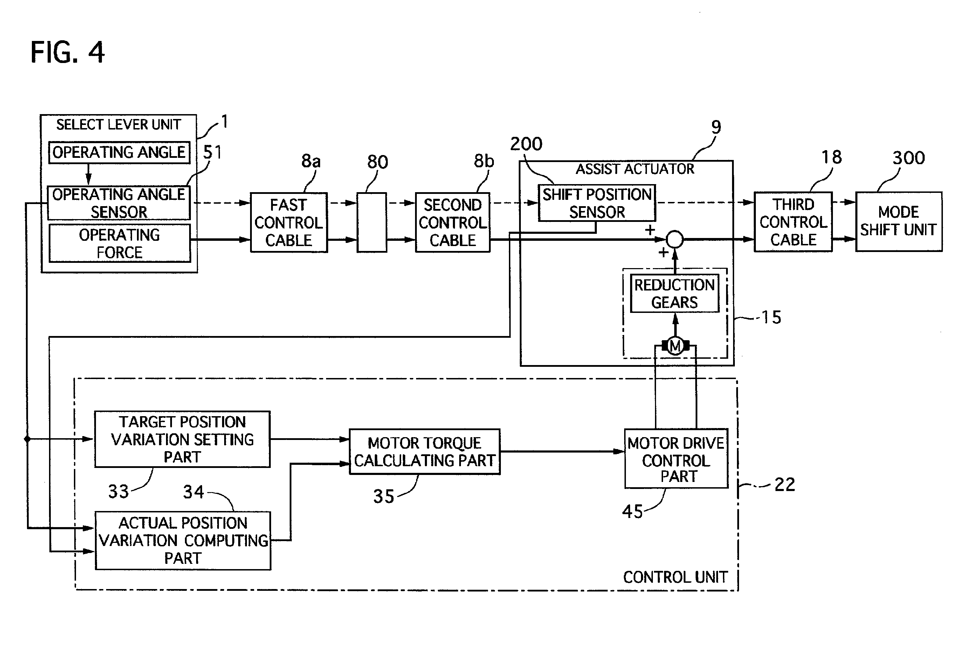

FIG. 4 shows a control block diagram of the control unit 22 and its related units. When the select lever 2 is shifted by a driver, the select lever 2 moves and changes its operating angle, and operating force inputted to the lever 2 by the driver is transmitted to the mode sift unit 300 through the first, second and third control cables 8a, 8b, and 18, and the coupling shaft 12. This operation angle is detected by the operating angle sensor 5, which outputs an operating angle signal to the control unit 22.

The first and second control cables 8a and 8b, and the force transmittable adjuster 80 rotate the coupling shaft 12, so that the terminal 24 on the worm wheel 14 united with the shaft 12 moves with respect to the carbon resistance 25 to change a relative angle between them. This relative angle, corresponding to an shift angle of the manual plate lever 20, is detected by the shift angle sensor 200 made up of the terminal 24 and the carbon resistance 25, which outputs a shift angle signal to the control unit 22.

The control unit 22 includes a target position variation setting part 33, an actual position variation computing part 34, a motor torque calculating part 35, and a motor drive control part 45.

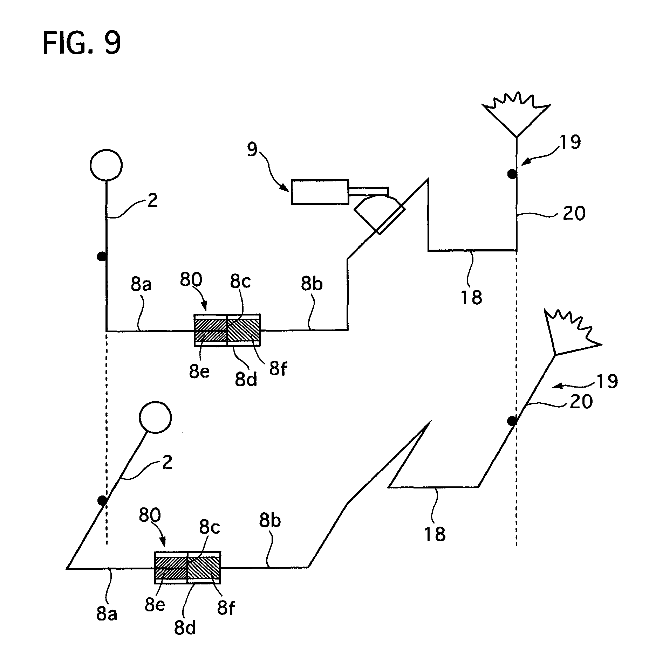

The target position variation setting part 33 is electrically connected to the operating angle sensor 51 to receive its operating angle signal. The target position variation setting part 33 refers to a target position variation map shown in FIG. 9 and determines a target position variation based on the operating angle signal to output a target position variation signal to the motor torque calculating part 35.

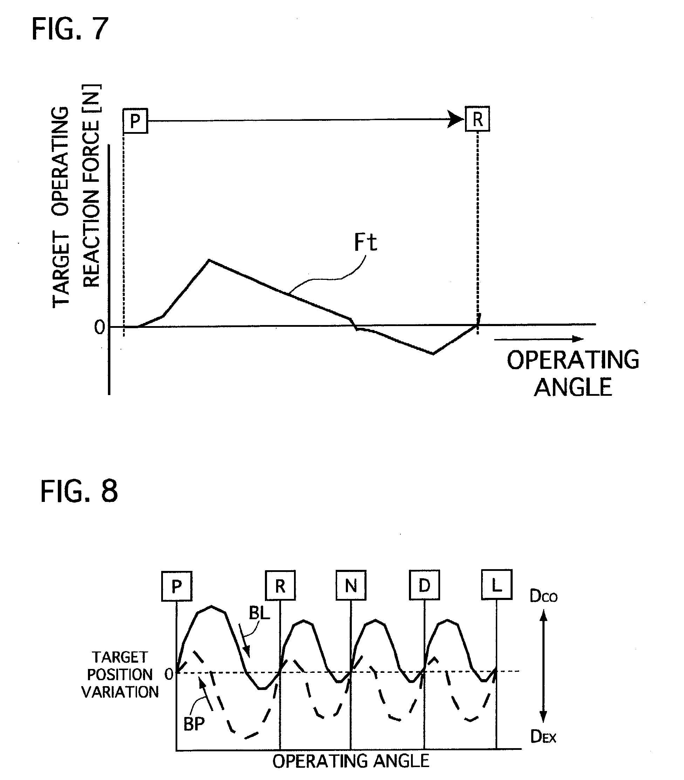

FIG. 8 shows the target position variation map having data on a relationship between a target position variation and an operating angle. In this map, the target position variations are set to have values determined according to a characteristic of detent force produced by the detent mechanism 350, and accordingly the values are different in the different operating directions BL and BP even in the same operating positions. The values of the variations are set to be zero in the P, R, N, D, and L positions, respectively. In FIG. 8, an arrow DCO indicates a direction where the first elastic member 8e is compressed and the second elastic member 8f is strained, while an arrow DEX indicates a direction where the first elastic member 8e is strained and the second elastic member 8f is compressed. The former state causes in a case when the select lever 2 is moved in the first direction BP and thereby the first control cable 8a moving in a direction indicated by an arrow BPa as shown in FIG. 1, while the latter state causes in a case when the select lever 2 is moved in the second direction BL and thereby the first control cable 8a moving in a direction indicated by an arrow BLb.

The actual position variation computing part 34 is electrically connected to the operating angle sensor 51 and the shift angle sensor to receive an operating angle signal and a shift angle signal. The actual position variation computing part 34 computes an actual position variation based on a difference between the operating angle and the shift angle so as to output an actual position variation signal to the motor torque part 35.

In a case where position variations differ in that of the select lever 2 and that of the manual plate lever 20 when the select lever 2 is shifted from the P position to the L position, the actual position variation is obtained by using the following equation:

$$V_A = A_{OP} - A_{SP} \times (W_{OP} / W_{SP}),$$

where $V_A$ is an actual variation between an operating angle $A_{OP}$ and a shift angle $A_{SP}$, $W_{OP}$ is an operating angle difference between one select position and another one, and $W_{SP}$ is a shift angle difference between manual plate lever positions corresponding to the above select positions.

The motor torque calculating part 35 receives the target position variation signal and the actual position variation signal and calculates a motor torque value so that a difference between the target position variation and the actual position variation becomes to be smaller, and outputs a motor torque command value signal to the motor drive control part 45. The motor torque calculating part 35 acts as a command assist value calculating part of the present invention.

The motor drive control part 45 receives the motor torque command value signal from the motor torque calculating part 35 and outputs motor drive current determined based on the motor torque command value signal to the motor 15 so that the motor 15 generates target assist force under Power Width Modulation (PWM) control. In stead of the PMW control, the motor 15 may be driven under other controls, such as current control or armature voltage control.

The motor 15 applies motor torque to the coupling shaft 12 in order to obtain resultant force by adding the target assist force to the operating force of the driver in the select operation, thereby the resultant force moving the first, second, and third control cables 8a, 8b, and 18, the select lever 2, and the mode shift unit 300 to shift the operation modes of the automatic transmission 19.

In the select device 100, when the operating position select unit 100 fails electrically because of a broken electric wire for example, the operating force of the select lever 2 is directly transmitted from the lever 2 to the mode shift unit 300 mechanically through the first, second, and third control cables 8a, 8b, and 18 and the force transmittable adjuster 80, the input and output levers 10 and 13 and the others. Accordingly, the mode shift unit 300 is driven to shift the modes of the automatic transmission 19, although its operating force becomes larger than that in a normal state.

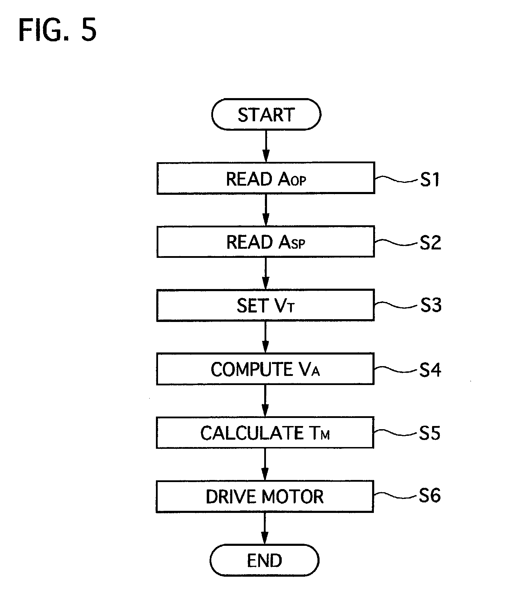

FIG. 5 shows a flowchart of an assist process executed in the control unit 22 in order to control the assist actuator 9 when the select lever 2 is operated by a driver.

At step S1, the operating angle sensor 51 detects an operating angle $A_{OP}$ of the select lever 2 and outputs an operating angle signal to the target position variation setting part 33 and the actual position variation computing part 34, and then the flow goes to step S2.

At the step S2, the shift angle sensor 200 detects an shift angle $A_{SP}$ of the coupling shaft 12, corresponding to that of the manual plate lever 20, and outputs a shift angle signal to the actual position variation computing part 34, and then the flow goes to step S3.

At the step S3, the target position variation setting part 33 refers to the target position variation map shown in FIG. 8 to set the target position variation $V_T$ based on the operating angle signal and outputs a target position variation signal to the motor torque calculating part 35, and then the flow goes to step S4.

At the step S4, the actual position variation computing part 34 computes an actual position variation by a difference between the operating angle and the shift angle based on the operating angle signal and the shift angle signal, and outputs an actual position variation signal to the motor torque calculating part 35, and then the flow goes to step S5.

At the step S5, the motor torque calculating part 35 calculates a motor torque value based on the target position variation signal and the actual position variation signal and outputs a motor torque command value signal to the motor drive control part 45, and then the flow goes to step S6.

At the step S6, the motor drive control part 45 outputs motor drive current to the motor 15 under the PWM control based on the motor torque command value signal so as to drive the motor 15, and then the flow ends.

In order to obtain favorable operating feeling in the above assist control, operating force to move the select lever 2 and target operating reaction force are determined as follows.

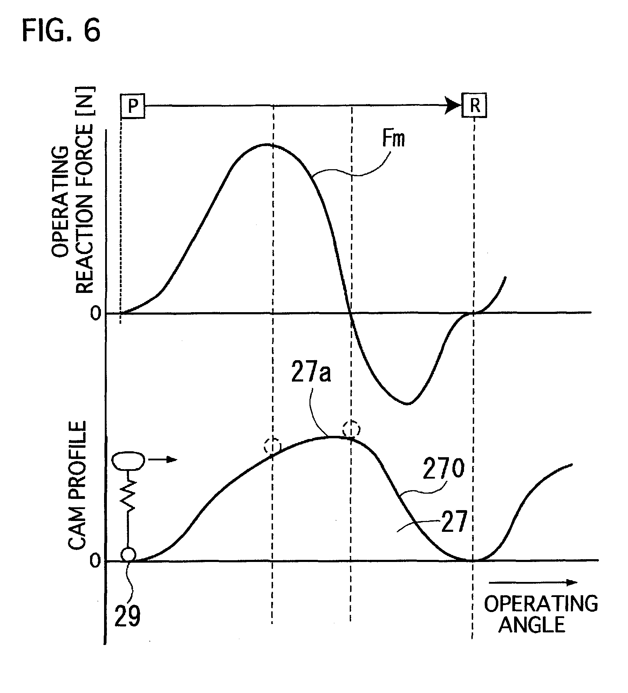

FIG. 6 shows characteristic relationships of operating reaction force Fm acting on the select lever 2, and a cam profile of the detent mechanism 350 with respect to the operating angle $A_{OP}$, respectively, during the select operation from the P position to the R position.

The operating reaction force Fm is calculated by using operating select torque detected by a torque sensor in a case where the motor 15 is not driven in the select operation from the Position to the R position. The reaction force Fm is generated by resultant force from the sum of friction force caused by the first, second, and third cables 8a, 8b, and 18, inertia force of the motor 15, spring force of the detent mechanism 350, and others.

The reaction force Fm increases in a direction opposite to the operating direction of the lever 2 as a function of the operating angle $A_{OP}$ and reaches its peak Fma before the detent pin 29 reaches the top portion 27a of the cam 270 formed on detent plate 27 as shown in FIG. 6, and then decreases with increasing the angle $A_{OP}$ in this pullback zone.

Specifically, in the pull-back zone, the reaction force Fm acts on the select lever 2 against the operating force inputted by the driver until the neutral position, because the detent plate 27 is biased by the spring force of the spring plate 28 in a direction opposite to the operating direction. The larger the deformation amount of the spring plate 28 becomes in the pull-back zone, the further the select lever 2 moves in the operating direction. Note that the operating force in the opposite direction is affected by not only the deformation amount of the spring plate 28, but also the cam profile. The above-described decrease of the resistance force Fm results from a slight slope of the cam 270.

In the pull-back zone, the operating force inputted from the select lever 2 needs to overcome the reaction force Fm generated by the spring force of the spring plate 28 and the cam profile, in order to move the select lever 2 in the operating direction.

In a neutral position where the detent pin 29 is on the peak of the cam 270, the reaction force Fm acting on the select lever 2 becomes zero due to its cam profile, although the spring plate 28 is deformed to the maximum degree.

After the detent pin 29 passes over the peak, the spring plate 28 starts to reduce its deformation amount until the pin 29 reaches the bottom of the cam 270 corresponding to the R position.

In this pull-in zone, the detent plate 27 is pressed by the spring plate 28 in the operating direction, so that the lever 2 is assisted to move forward by the reaction force Fm. Accordingly, the select lever 2 is propelled by the reaction force Fm, increasing at first and then decreasing, in such a way that the lever 2 is pulled into the bottom portion 27b corresponding to the R position.

Therefore, the operating force to be applied from the select lever 2 needs to be larger than and overcome the reaction force Fm shown in FIG. 6 in order to manually move the select lever 2 for an select operation without assist force of the motor 15.

FIG. 7 is a schematic diagram showing target reaction force Ft with respect to the operating angle $A_{OP}$ when the select lever 2 is shifted from the P position to the R position. This target reaction force Ft is set as shown in FIG. 7 so as to bring a driver favorable operationality by providing nice click-feeling during the select operation.

When the select lever 2 is moved from the P position to the R position for example, the target reaction force Ft is set to have a pull-back zone where the target resistance force Ft acts against the operating direction of the lever 2, indicated by a line Ft over a horizontal axis of the operating angle in FIG. 7, a neutral poison on the horizontal axis, and a pull-in zone where the target resistance force Ft acts in the operating direction, indicated by the line Ft under the horizontal axis. In the pull-back zone and pull-in zone, the target reaction force Ft increases at first and then decreases, although their acting directions are different from each other.

In the operating position select device 100 of the first embodiment, the assist control is executed based on a target position variation and an actual position variation so that resultant force of assist force added from the motor 15 and operating force inputted by a driver overcomes the resistance force Fm shown in FIG. 6 and the driver receives the target resistance force Ft shown in FIG. 7. This assist control brings favorable operationality.

Incidentally, detent force produced by the detent mechanism 350 acts as check force providing a driver with a clicking feeling during his or her select operation through the select lever 2. The select lever 2 is kept positioned stably in one of the select position in a state where the detent pin 29 is pressed by the detent force produced by the spring plate 28 so as to be halted at the corresponding bottom portion of the cam 270 formed on the detent plate 27.

In order to assist the select operation with providing favorable clicking feeling for a driver, a checking mechanism may be mounted on the select lever unit 1 in addition to the detent mechanism 350 mounted on the automatic transmission 19. This addition of the checking mechanism, however, requires high installation precision of the checking mechanism and the detent mechanism 350, because they need to be synchronized to be positioned stably in their corresponding positions when operating force is zero.

This disadvantage is solved by using the force transmittable adjuster 80 in the first and second control cables 8a and 8b in the first embodiment. The force transmittable adjuster 80 has the cylinder 8d and the piston 8c that are slidable with respect to each other so as to cause play for adjusting misalignment between the checking mechanism and the detent mechanism 350.

Accordingly, the play enables the stable state range to expand, but has the following problem.

The amount of the play is preferably set to be a half of the maximum play caused by the checking mechanism and the detent mechanism 350 in the stable positions where operating force is zero, in a case where the mechanisms moves in synchronization with each other with having the play, since the select lever 2 is operated in the first and second directions BP and BL as shown in FIGS. 1 and 8. This play setting also needs high installation precision, resulting in difficult assembly.

In order to avoid such a problem, the play is set larger than the above setting, and the force transmittable adjuster 80 is provided with the first and second elastic members 8e and 8f at the both side of the piston 8c. One of the first and second elastic members 8e and 8f produces reaction force against the select lever 2 and acts to decrease the amount of the play. This brings a driver to feel reaction force against the select lever 2 and decreases the play, providing favorable operation feeling.

As described above, in the operating position select device 100 of the first embodiment, the select lever 2 becomes heavy for its operation, due to reaction force caused by detent force of the detent mechanism 350 and transmitted through the first, second, and third control cables 8a, 8b, and 18, and the manual plate lever 20 of the automatic transmission 19.

In this state, the manual plate lever 20 can not follow the operation of the select lever 2 sufficiently. Therefore, these positions are detected as a shift angle and an operating angle in order to control the assist actuator 9. Specifically, the operating angle of the select lever 2 is detected by the operating angle sensor 51, and the shift angle corresponding to that of the manual plate lever 20 is detected by the shift angle sensor 200. These detected angles are sent to the control unit 22, which controls the assist actuator 9 to output assist force so that a position variation becomes a predetermined value. This control can decrease reaction force acting on the select lever 2, resulting in a favorable light select operation.

In the above assist control, the target position variation setting part 33 sets a target position variation according to a detected operating angle as shown in FIG. 8. In FIG. 8, the target position variation in a select operation in the second direction BL is indicated by a full line, while the target position variation in a select operation in the first direction BL is indicated by a broken line.

The motor torque calculating part 35 determines a motor torque value for driving the motor 15 so that an actual position variation computed in the actual position variation computing part 34 becomes closer to the target position variation. This control provides a favorable select operation feeling which is preset and close to an ideal one.

The target position variation setting part 33 is provided with the target position variation map, whose values are determined according to operating directions, respectively. This enables finely setting of the target position variations according to each inputted operating force and operating direction, thereby obtaining the favorable operation feeling in both operating directions.

The select lever 2 is in a stable state, when its operation is stopped in one of the select positions P to L. Then, the lever 2 is operated from the stable state, one of the first and second elastic members 8e and 8f is compressed and the other of them is strained, which produces elastic force and transmits operating force to the manual plate lever 20 through the second and third control cables 8b and 18, and the others. The manual plate lever 20 rotates the detent plate 27 together with it against detent force generated by the detent mechanism 350. Accordingly, the select lever 2 receives resultant force of the detent force and the elastic force, which provides a driver with a clicking feeling, resulting in removal of a checking mechanism of the select lever unit 1.

When the select lever 2 is halted in a select position without inputted operating force, the force transmittable adjuster 80 has a proper length as shown in an upper half portion of FIG. 9. Then, when the lever 2 is moved by operating force, the force transmittable adjuster 80 changes its length by deforming the first and second elastic members 8e and 8f and transmits the operating force from the first control cable 8a to the second control cable 8b by the elastic members 8e and 8f so as to rotate the manual plate lever 20 through the third control cable 18.

In this case, for example, the first elastic member 8e compresses and the second elastic 8f extends so as to increase the length of the force transmittable adjuster 80 when the lever 2 is shifted toward a desired select position shown in a lower half portion of FIG. 9. This deformations of the elastic members 8e and 8f cause elastic force to transmit the operating force between the first and second control cables 8a and 8b. When the select lever 2 is positioned in the desired select position and the inputted operating force is removed, the elastic members 8e and 8f returns to its original state shown in the upper half portion of FIG. 9, and the length of the force transmittable adjuster 80 is shorten from the not-shown extended length to the original length shown in the upper half portion of FIG. 9.

This operating position select device 100 of the first embodiment has many advantages described below.

The select lever 2 can be shorter than a conventional one by approximately 150 mm at its portion projecting from a center console toward a passenger compartment without increasing an operating force applied to the select lever 2 so much. This brings a design freedom concerning an installation location of the select lever and/or a layout of a passenger compartment to be broadened.

When operating the select lever 2, assist torque from the electric motor 15 is applied to the coupling shaft 12 of the mechanically connecting mechanism so as to reduce the operating force applied to the select lever 2. When the operating position select unit 100 fails electrically, a driver can shift the mode shift unit 300 by operating the select lever 2 because the select lever 2 and the mode shift unit 300 are mechanically connected by the mechanically connecting mechanism, such as the first, second, and third control cables 8a, 8b, and 18, the force transmittable adjuster 80 including the first and second elastic members 8e and 8f, and the others.

The force transmittable adjuster 80 can change its length by relatively moving of the piston 8c and the cylinder 8d between the first and second control cables 8a and 8b and transmit operating force and detent force between the select lever 2 and the manual plate lever 20 by the first or second elastic members 8e and 8f. This enables a checking mechanism of the select lever unit 1 to be removed, resulting in low manufacturing cost and can suppress deterioration of a operating feeling due to play of the control cables 8a, 8b, and 18.

The assist control is performed based on a target position variation determined according to an operating angle of the select lever 2 and an actual position variation between the operating angle and a shift angle of the manual plate lever 20. This control can provide a driver with operating reaction force so that the operating reaction force becomes closer to target reaction force.

The target position variation setting part 33 has the target position variation map, as shown in FIG. 8, having an independent value of the target position variation between the first and second operating direction BP and BL even at the same operating angle $A_{OP}$. This can provide a driver with operating reaction force so that it becomes closer to target reaction force, resulting in a comfortable operation feeling for the driver.

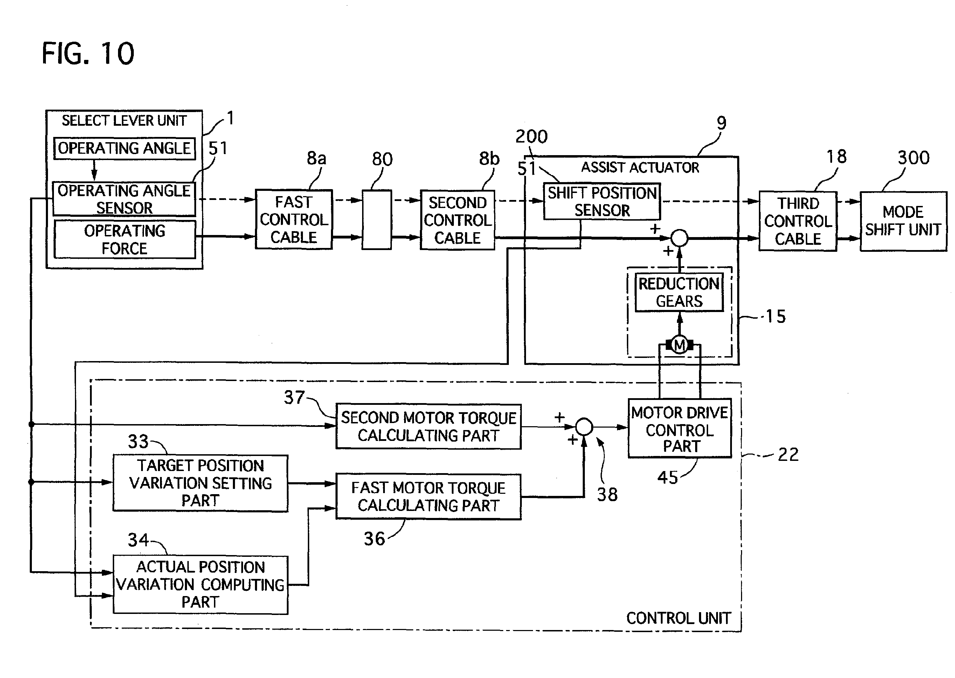

Next, an operating position select device of a second embodiment according to the present invention will be described with reference to the accompanying drawings of FIGS. 10 to 12.

This operating position select device is constructed similarly to that of the first embodiment shown in FIGS. 1 to 4 except a control unit 22. The control unit 22 includes a first motor torque calculating part 36, a second motor torque calculating part 37, and an adder 38.

The first motor torque calculating part 36 is electrically connected to a target position variation setting part 33 that sets a target position variation based on an operating angle of a select lever and also to an actual position variation computing part 34 that computes an actual position variation based on the operating angle and a shift angle of a manual plate lever . It receives a target position variation signal and an actual position variation signal, and calculates a first motor torque command value based on a difference between the target position variation and the actual position variation so as to drive an electric motor 15 of an assist actuator under Proportional-Integral (PI) control.

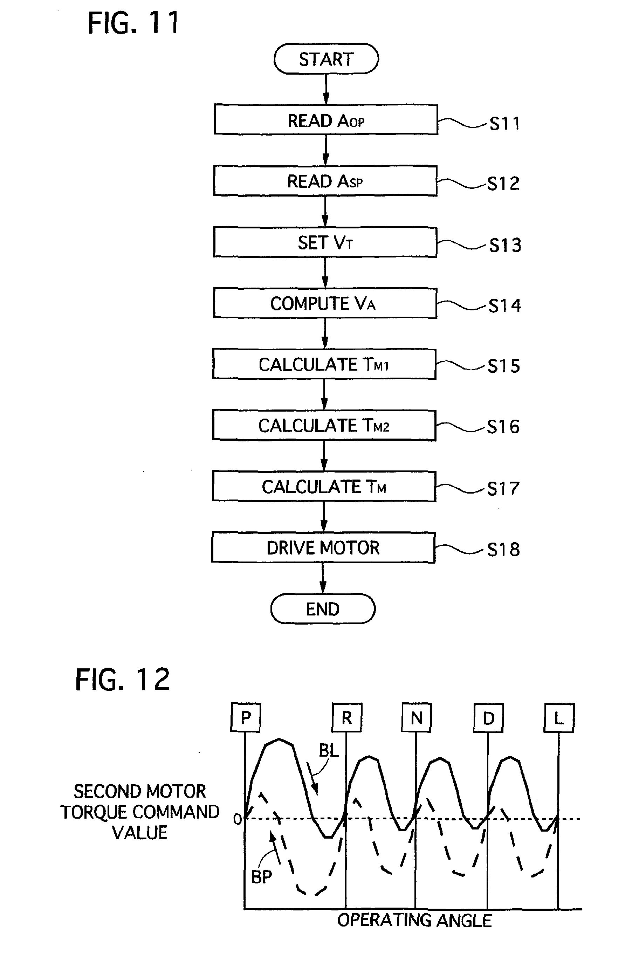

The second motor torque calculating part 37 is electrically connected to an operating angle sensor 51 to receive an operating angle signal, and is provided with a motor torque map having data on a relationship between an operating angle and second motor torque command values to obtain motor torque required for eliminating the target position variation as shown in FIG. 12. This second motor torque values are set independently between the first and second operating directions BP and BL even at the same operating angle. The second motor torque calculating part 37 refers to the motor torque map and calculates a second motor torque command value based on the operating angle signal so as to drive the motor 15 under feedforward control.

The adder 38 is electrically connected to the first and second motor torque calculating parts 36 and 37 to receive a first motor torque command value signal and a second motor torque command value signal from them, respectively, and adds the first motor torque command value signal and the second motor torque command value signal to output a motor torque command value signal to a motor drive control part 45.

The first and second motor torque calculating parts 36 and 37, and the adder 38 act as a command assist value calculating part of the present invention. The first motor torque calculating part 36 acts as a first command assist value calculating part of the present invention, and the second motor torque calculating part 37 acts as a second command assist value calculating part of the present invention.

The other parts of the operating position select device of the second embodiment are similar to those of the first embodiment.

FIG. 11 is a flowchart of the assist control executed by the control unit 22.

At step S11, the operating angle sensor 51 detects an operating angle $A_{OP}$ and outputs an operating angle signal to the target reaction force setting part 33 and the actual position variation computing part 34, and then the flow goes to step S12.

At the step S12, a shift angle sensor 200 detects a shift angle $A_{SP}$ and outputs a shift angle signal to the actual position variation setting part 34, and then the flow goes to step S13.

At the step S13, the target position variation setting part 33 refers to the target position variation map and sets a target position variation $V_T$ based on the operating angle $A_{OP}$, and then the flow goes to step S14.

At the step S14, the actual position variation computing part 34 computes an actual position variation $V_A$ based on the operating angle $A_{OP}$ and the shift angle $A_{SP}$, and then the flow goes to step S15.

At the step S15, the first motor torque calculating part 36 calculates a first motor torque command value $T_{M1}$ based on a difference between the target position variation $V_T$ and the actual position variation $V_A$ and outputs a first motor torque command value signal to the adder 38, and then the flow goes to step S16.

At the step S16, the second motor torque calculating part 37 sets a second motor torque command value $T_{M2}$ based on the operating angle $A_{OP}$ referring to the motor torque map and outputs a second motor torque command value signal to the adder 38, and then the flow goes to step S17.

At the step S17, the adder 38 adds the first motor torque command value $T_{M1}$ and the second motor torque command value $T_{M2}$ and output its sum as a motor torque command value $T_M$ to the motor drive control part 45, and then the flow goes to step S18.

At the step S18, the motor drive control part 45 outputs motor drive current determined based on the motor torque command value $T_M$ to the motor 15, thereby the motor 15 applying assist force under $P_{MW}$ control to the select lever, and then the flow ends.

The advantages of the operating position select device of the second embodiment will be described.

This operating position select device has advantages similar to those of the first embodiment.

Besides, in the operating position select device of the second embodiment, the second motor torque calculating part 37 determines a first motor torque command value TM2 based on an operating angle referring to the motor torque map so as to drive the motor 15. This second motor torque command value is used as a command value for the feedforward control in the select-lever assist control, which can improve tracking ability of the assist control in comparison with PI control using an actual position variation and executed only by the first motor torque calculating part 36, for example. In addition, this operating position select device can provide a driver with a favorable operation feeling.

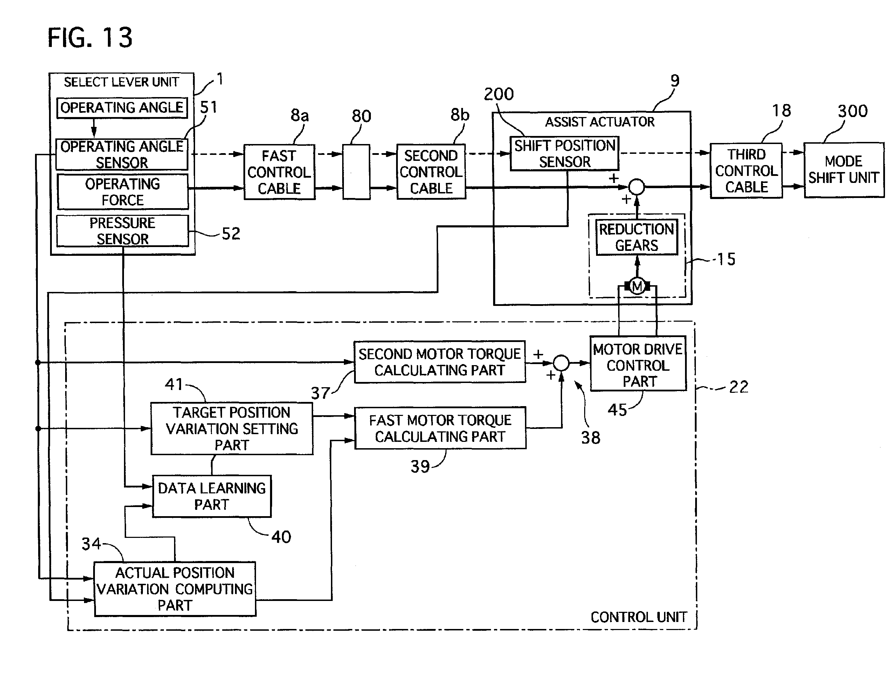

Next, an operating position select device of a third embodiment according to the present invention will be described with reference to the accompanying drawings of FIGS. 13 to 15.

This operating position select device is constructed similarly to that of the second embodiment shown in FIG. 10 except a select lever unit 1 and a control unit 22.

The select lever unit 1 is provided with a pressure sensor 52 on a knob mounted on a select lever.

The control unit 22 includes a position variation learning 40 electrically connected to the pressure sensor 52 and an actual position variation computing part 34, a target position variation setting part 41 electrically connected to an operating angle sensor 51 and the position variation learning part 40, a first motor torque calculating part 39 electrically connected to the target position variation setting part 41 and the actual position variation computing part 34, and a second motor torque calculating part 37 electrically connected to the operating angle sensor 51.

The pressure sensor 52 detects pressure acting on the knob by a driver's hand and outputs a pressure signal to the position variation learning part 40. The pressure sensor 52 acts as an operation state detector of the present invention, and the pressure signal corresponds to a non-operation signal of the present invention.

The position variation learning part 40 reads the pressure from the pressure sensor 52 and judges based on the pressure signal whether or not the select lever is operated. When it judges that the lever is not operated, the position variation learning part 40 learns a target position variation and outputs its revised value to the target position variation setting part 41 so as to change data of its target position variation map. On the other hand, when it judges that the lever is being operated, the position variation learning part 40 changes no data on the target position variation.

The target position variation setting part 41 changes the data of the target position variation map according to the revised value outputted from the position variation learning part 40, and outputs the target position variation determined based on the operating angle to the first motor torque calculating part 39.

The position variation learning part 40 and the target position variation setting part 41 act as a data revising part of the present invention.

The first and second motor torque calculating parts 39 and 37, and the adder 38 act as a command assist value calculating part of the present invention. The first motor torque calculating part 39 acts as a first command assist value calculating part of the present invention, and the second motor torque calculating part 37 act as a second command assist value calculating of the present invention.

The other parts of the operating position select device of the third embodiment are similar to those of the first and second embodiments.

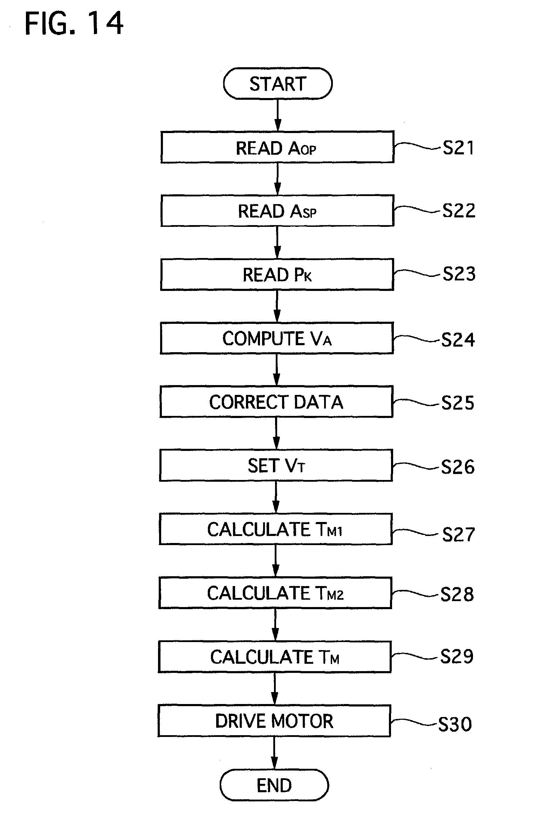

The control unit 22 executes a flowchart, shown in FIG. 14, of assist control as follows.

At step S21, the operating angle sensor 51 detects an operating angle $A_{OP}$ and outputs an operating angle signal to the target reaction force setting part 41, the actual position variation computing part 34, and the second motor torque calculating part 37, and then the flow goes to step S22.

At the step S22, a shift angle sensor 200 detects a shift angle $A_{SP}$ and outputs a shift angle signal to the actual position variation setting part 34, and then the flow goes to step S23.

At the step S23, the pressure sensor 52 detects pressure PK acting on the knob of the select lever and outputs a pressure signal to the position variation learning part 40, and then the flow goes to step S24.

At the step S24, the actual position variation computing part 34 computes an actual position variation $V_A$ based on the operating angle $A_{OP}$ and the shift angle $A_{SP}$, and then the flow goes to step S25.

At the step S25, the position variation learning part 40 learns an actual position variation in a case where the select lever is not operated and outputs a revised value for changing the data of the target position variation used in the target position variation map of the target position variation setting part 41, and then the flow goes to step S26.

At the step S26, the target position variation setting part 41 refers to the target position variation map whose data is changed according to the revised value and sets a target position variation $V_T$ based on the operating angle $A_{OP}$, and then the flow goes to step S27.

At the step S27, the first motor torque calculating part 39 calculates a first motor torque command value $T_{M1}$ based on a difference between the target position variation $V_T$ and the actual position variation $V_A$ and outputs a first motor torque command value signal to the adder 38, and then the flow goes to step S28.

At the step S28, the second motor torque calculating part 37 sets a second motor torque command value TM2 based on the operating angle $A_{OP}$ referring to the motor torque map and outputs a second motor torque command value signal to the adder 38, and then the flow goes to step S29.

At the step S29, the adder 38 adds the first motor torque command value TM1 and the second motor torque command value TM2 and outputs its sum as a motor torque command value TM to a motor drive control part 45, and then the flow goes to step S30.

At the step S30, the motor drive control part 45 outputs motor drive current determined based on the motor torque command value TM to the motor 15, thereby the motor 15 applying assist force under PMW control to the select lever, and then the flow ends.

The operating position select device has a first, second, and third control cables, and the force transmitting adjuster, which becomes longer than their original length due to change over time or heat generated during operation in some cases.

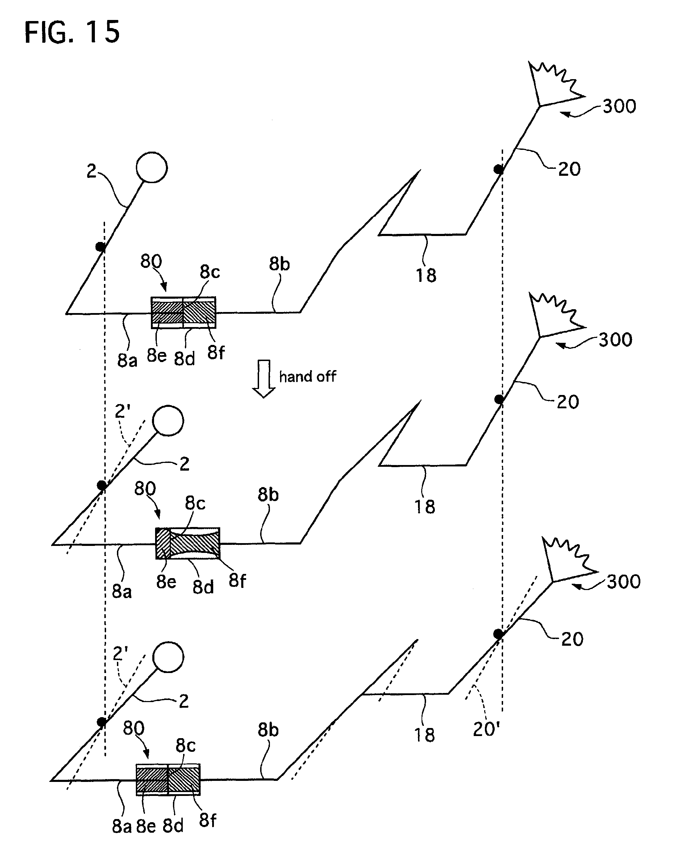

FIG. 15 shows a schematic diagram illustrating behavior of the select lever 2, the first, second, and third control cables 8a, 8b, and 18, the force transmitting adjuster 80 and a manual plate lever 20 in a state where deformation of elastic members 8e and 8f used in a force transmittable adjuster 80 does not cause, in a state where it causes, and in a state where it is eliminated by assist control, when the select lever 2 is positioned in certain select position.

An upper portion of FIG. 15 shows in a case where the select lever 2 and a manual plate lever 20 of a mode shift unit 300 can move in synchronization with each other in a case, where the deformation of the elastic members 8e and 8f does not occurs when the lever 2 is positioned in one of the select positions and is not applied by operating force from a driver. In this case, a piston 8c and a cylinder 8d of the force transmittable adjuster 80 is kept to have an original state and length due to optimum adjustment of relations among the select lever 2, the manual plate lever 20, the control cables 8a, 8b, and 18, the force transmittable adjuster 80, and others.

On the other hand, the first elastic member 8e is smaller in cross sectional area than the second elastic member 8f, since the first elastic member 8e has a hole for passing the first control cable 8a therethrough. This causes the first and second elastic members 8e and 8f to have different elastic force from each other in some cases. Consequently, as shown in an intermediate portion of FIG. 15, in a case where the elastic members 8e and 8f become deformed due to the change over time or the heat generated during operation, the select lever 2 is tilted from a position indicated by a line 2', which corresponds to the position illustrated in the upper portion of FIG. 15, because the second elastic member 8f becomes longer in deformation than the first member 8e, and pushing and moving the piston 8c toward a select lever side although the cylinder 8d does not move.

In the above state, an operating angle of the select lever 2 and a shift angle of the manual plate lever 20 differs, which is detected by the operating angle sensor 51, the shift angle sensor 200, and the actual position variation computing part 34. In the operating position select device of the first and second embodiments, the motor drive control part 45 drives the motor 15 based on the actual position variation so as to perform assist control, thereby moving the manual plate lever 20. The above mentioned tilt of the lever 2 and tracking movement of the manual plate lever 20 may be repeated, which is unfavorable.

The operating position select device of the third embodiment is, therefore, provided with the position variation learning part 40 so as to resolve the above problem.

The position variation learning part 40 receives the actual position variation from the actual position variation computing part 34 and outputs a revised value to the target position variation setting part 41, when it detects no operating force acting on the lever 2 based on a pressure signal outputted from a pressure sensor 52. The target position variation setting part 41 changes the data of the position variation map based on the revised value.

Accordingly, the target position variation is set referring to the changed target position variation map, which counts for the deformation of the elastic members 8e and 8f in the state shown in the intermediate portion of FIG. 15. In other words, the manual plate lever 20 is prevented from moving by the assist control based on the deformation of the elastic members 8e and 8f.

When at least one of the cables 8a, 8b, and 18 deforms due to Change over time or heat generated during operation, similar operation and advantage described above can be obtained by using the position variation learning part 40.

The operating position select device of the third embodiment has the following advantage in addition to those of the first and second embodiments.

The select device is provided with the pressure sensor 52 and the position variation learning part 40, which enables the select lever 2 and the manual plate lever 20 to be kept in a state before a driver's hand is taken off from the select lever even when the elastic members 8e and 8f and/or the cables 8a, 8b, and 18 become deformed due to change over time or heat generated during operation, for example.

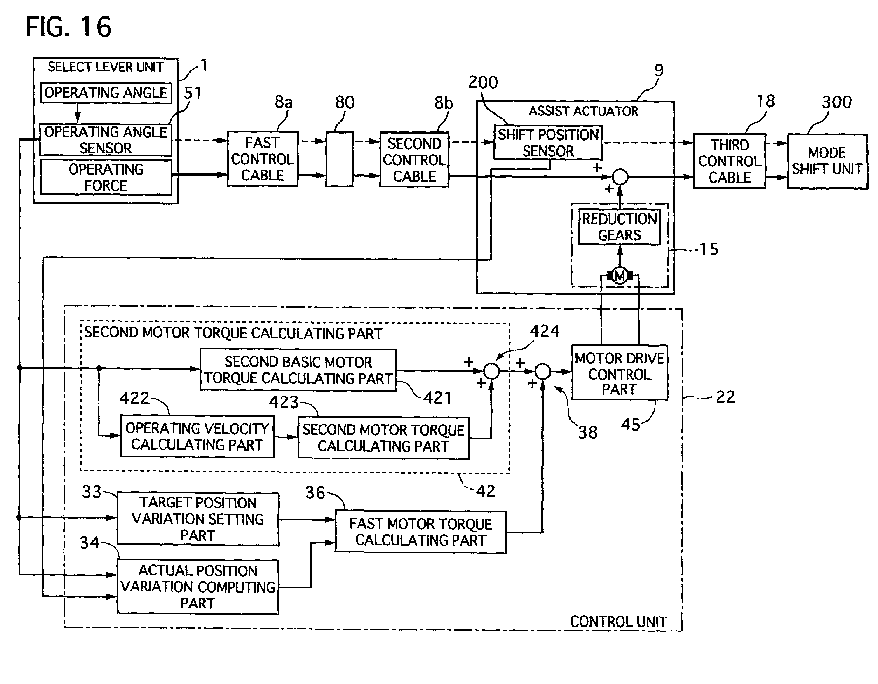

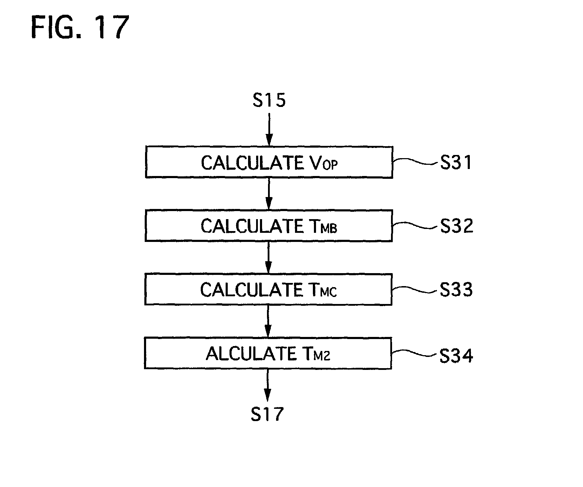

Next, an operating position select device of a fourth embodiment according to the present invention will be described with reference to the accompanying drawings of FIGS. 16 and 17.

This operating position select device is constructed similarly to that of the second embodiment shown in FIG. 10 except a control unit 22.

The control unit 22 has a second motor torque calculating setting part 42, which is composed of a second basic motor torque calculating part 421 electrically connected to an operating angle sensor 51, an operating velocity calculating part 422 electrically connected to the operating angle sensor 51, a second motor torque compensating part 423 electrically connected to the operating velocity calculating part 422, and a second torque adder 424 electrically connected to the second basic motor torque calculating part 421 and the second motor torque compensating part 423.

The second basic motor torque calculating part 421 is provided with a second motor torque map having data on a relationships between an operating angle and a second motor torque command basic value. The second basic motor torque calculating part 421 refers to the second motor torque map to determine a second motor torque command basic value for feedforward control based on the operating angle outputted from the operating angle sensor 51 and outputs a second motor torque command basic value signal to the adder 424. The second motor torque command basic value and the second motor torque command basic value signal correspond to a command basic assist value and a command basic assist value of the present invention, respectively.

The operating velocity calculating part 422 calculates operating velocity of a select lever based on an operating angle outputted from the operating angle sensor 51 and outputs its operating velocity signal to the second motor torque compensating part 423.

The second motor torque compensating part 423 calculates a compensation value, which is set to be larger as the operating velocity becomes higher, based on the operating velocity signal and outputs a compensation value signal to the adder 424. The second motor torque compensating part 423 acts as a compensation calculating part of the present invention.

The second torque adder 424 adds the compensation value to the second motor torque command basic value and outputs a second motor torque command value signal to an adder 38. The second torque adder 424 acts as a second command assist value compensating part of the present invention.

A first motor torque calculating part 36 and second motor torque calculating part 42, and the adder 38 act as a command assist value calculating part of the present invention. The first motor torque calculating part 36 acts as a first command assist value calculating part of the present invention, and the second motor torque calculating part 42 act as a second command assist value calculating of the present invention.

The other parts of the operating position select device of the third embodiment are similar to those of the first and second embodiments.

The control unit 22 executes a flowchart of assist control similar to the flowchart of the second embodiment shown in FIG. 11 except it has a flowchart for the feedback control instead of the step S16 in FIG 11.

FIG. 17 shows the flowchart for the feedforward control.

The control unit 22 executes the steps S11 to S15 of FIG. 11, and then step S31 of FIG. 17.

At the step S31, the operating velocity calculating part 422 calculates operating velocity VOP based on an operating angle outputted from the operating angle sensor 51 and outputs its operating velocity signal to the second motor torque compensating part 423, and then the flow goes to step S32.

At the step S32, the second basic motor torque calculating part 421 refers to the second motor torque map to determine a second motor torque command basic value $T_{MB}$ for the feedforward control based on the operating angle outputted from the operating angle sensor 51 and outputs a second motor torque command basic value signal to the adder 424, and then the flow goes to step S33.

At the step S33, the second motor torque compensating part 423 calculates a compensation value TMC based on the operating velocity signal and outputs a compensation value signal to the adder 424, and then the flow goes to step S34.

At the step S34, the second torque adder 424 adds the compensation value TMC to the second motor torque command basic value $T_{MB}$ to obtain a second motor torque command value TM2 and outputs a second motor torque command value signal to the adder 38, and then the flow goes to the step S17 of FIG. 11.

The operating position select device of the fourth embodiment has the following advantage in addition to the advantages of the first and second embodiments.

The second basic motor torque calculating part 421, the operating velocity calculating part 422, the second motor torque compensating part 423, and the second torque adder 424 can perform the feedforward control accounted for the operating velocity of the select lever, thereby improving its tracking ability of the manual lever plate 20 with respect to the operation of the select lever. This can provide a driver with a more favorable operating feeling.

While there have been particularly shown and described with reference to preferred embodiments thereof, it will be understood that various modifications may be made therein, and it is intended to cover in the appended claims all such modifications as fall within the true spirit and scope of the invention.

For example, the operating position may be detected by the displacement amount of the select lever 2 or the mechanically connecting mechanism that connects the select lever 2 and the mode shift unit 300 with each other instead of the operating angle of the select lever 2. The shift position of the manual plate lever 20 may be detected by the displacement amount of the third control cable 18 or the like instead of the shift angle.

The mechanically connecting mechanism may be rods or linkage instead of the first and second control cables 8a, 8b, and 18 in the above embodiments.

The select lever may be of a shape different from the above embodiments. The select lever 2 may have a configuration different from that of the first embodiment shown in FIG. 1, for example, a finger- controllable one.

The configuration of the cam of the detent mechanism may be formed arbitrarily to have different target reaction force.

The elastic members 8e and 8f of the torque transmitting adjuster 80 may be made of material different from rubber and/or configuration, a metal spring for example.

The torque transmitting adjuster 80 may have only one elastic member instead of two members 8e and 8f.

The torque transmittable adjuster 80 may have a clearance between the elastic member/members and the select lever, or between the elastic member/members and cylinder.

The piston 8c and the cylinder 8d may be replaced by members that have play for changing its own length, whose configurations are arbitrary.

**Claims**

1. An operating position select device (100) for an automatic transmission (19) whose operation modes are shiftable, the operating position select device (100) comprising:

   a select lever unit (1) having a select lever (2) that is operated by a driver between a plurality of select positions corresponding to the operation modes;

   **characterized in that** said device includes an operating position sensor (51) that detects an operating position of the select lever (2) and outputs an operating position signal;

a mode shift unit (300) mounted on said automatic transmission (19) to shift operation modes of said automatic transmission (19);

a shift position sensor (200) that detects a shift position of said mode shift unit (300) and outputs a shift position signal;

a mechanically connecting means (8a, 8b, 18, 80) that mechanically connects the select lever (2) and said mode shift unit (300) with each other;

an assist actuator (9) that is arranged between the select lever (2) and said mode shift unit (300) and supplies assist force to the select lever (2); and

a control unit (22) that controls said assist actuator (9), wherein

said mechanically connecting means (8a, 8b, 18, 80) has a torque transmittable adjuster (80) at an intermediate part thereof, the torque transmittable adjuster (80) having play for changing a length thereof and an elastic member (8e, 8f) disposed into the play so as to transmit force through the torque transmittable adjuster (80).

2. An operating position select device (80) for an automatic transmission (19) according to claim 1, **characterized in that**
said control unit (22) has a target position variation setting part (33) that sets a target position variation based on the operating position signal and outputs a target position variation signal,
an actual position variation computing part (34) that computes an actual position variation between the operating position and the shift position based on the operating position signal and the shift position signal and outputs an actual position variation signal, and
a command assist value calculating part (35; 36,37, 38; 37, 38, 39; 36, 38, 42) that calculates a command assist value so that the actual position variation becomes the target position variation.

3. An operating position select device (100) for an automatic transmission (19) according to claim 1, **characterized in that**
said control unit (22) has a target position variation setting part (33; 41) that sets a target position variation based on the operating position signal and outputs a target position variation signal,
an actual position variation computing part (34) that computes an actual position variation between the operating position and the shift position based on the operating position signal and the shift position signal and outputs an actual position variation signal,
a first command assist value calculating part (36; 39) that calculates a first command assist value so that the actual position variation becomes the target position variation and outputs a first command assist value signal,

a second command assist value calculating part (37; 42) that calculates a second command value for compensating the first command value based on the operating position and outputs a second command value signal, and
a command assist value calculating part (38) that calculates a command assist value based on the first command value signal and the second command value signal.

4. An operating position select device (100) for an automatic transmission (19) according to either claim 2 or claim 3, **characterized in that**
said control unit (22) is provided with an operation state detector (52) that detects no select lever operation of a driver and an outputs non-operation signal, and
a data revising part (40, 41) that revises data of the target position variation based on the actual position variation obtained when receiving the non-operation signal.

5. An operating position select device (100) for an automatic transmission (19) according to anyone of claims 2 to 4 **characterized in that**
the target position variation is set to have an independent value from each other at the same operating position in different operating directions.

6. An operating position select device (100) for an automatic transmission (19) according to anyone of claims 2 to 4, **characterized in that**
the target position variation is stored in a target position variation map.

7. An operating position select device (100) for an automatic transmission (19) according to claim 3, wherein
the second command assist value calculating part (42) includes a command basic assist value calculating part (421) that calculates a command basic assist value based on the operating position and outputs a command basic assist value signal,
an operating velocity calculating part (422) that calculates operating velocity of the select lever (2),
a compensation calculating part (423) that calculates a compensation value based on the operating velocity signal and outputs a compensation value signal, and
a second command assist value compensating part (424) that compensates the command basic assist value based on the command basic assist value signal and compensation value signal.

## FIG. 1

# FIG. 2

## FIG. 3

FIG. 4

# FIG. 5

```
                    ( START )
                        |
                        v
          +---------------------------+
          |       READ A_OP           |----- S1
          +---------------------------+
                        |
                        v
          +---------------------------+
          |       READ A_SP           |----- S2
          +---------------------------+
                        |
                        v
          +---------------------------+
          |        SET V_T            |----- S3
          +---------------------------+
                        |
                        v
          +---------------------------+
          |      COMPUTE V_A          |----- S4
          +---------------------------+
                        |
                        v
          +---------------------------+
          |     CALCULATE T_M         |----- S5
          +---------------------------+
                        |
                        v
          +---------------------------+
          |      DRIVE MOTOR          |----- S6
          +---------------------------+
                        |
                        v
                    ( END )
```

FIG. 6

FIG. 7

TARGET OPERATING REACTION FORCE [N]

P → R

Ft

0

OPERATING ANGLE

FIG. 8

P    R    N    D    L

Dco

BL

TARGET
POSITION    0
VARIATION

BP

Dex

OPERATING ANGLE

FIG. 9

# FIG. 10

SELECT LEVER UNIT 1

OPERATING ANGLE

OPERATING ANGLE SENSOR 51

OPERATING FORCE

FAST CONTROL CABLE 8a

80

SECOND CONTROL CABLE 8b

200

ASSIST ACTUATOR 9

SHIFT POSITION SENSOR 51

THIRD CONTROL CABLE 18

MODE SHIFT UNIT 300

REDUCTION GEARS 15

M

SECOND MOTOR TORQUE CALCULATING PART 37

MOTOR DRIVE CONTROL PART 45

22

TARGET POSITION VARIATION SETTING PART 33

FAST MOTOR TORQUE CALCULATING PART 36

38

ACTUAL POSITION VARIATION COMPUTING PART 34

CONTROL UNIT

EP 1 598 577 A2

## FIG. 11

```
START
  ↓
READ A_OP        — S11
  ↓
READ A_SP        — S12
  ↓
SET V_T          — S13
  ↓
COMPUTE V_A      — S14
  ↓
CALCULATE T_M1   — S15
  ↓
CALCULATE T_M2   — S16
  ↓
CALCULATE T_M    — S17
  ↓
DRIVE MOTOR      — S18
  ↓
END
```

## FIG. 12

SECOND MOTOR TORQUE COMMAND VALUE

P    R    N    D    L

BL

BP

OPERATING ANGLE

## FIG. 13

SELECT LEVER UNIT 1

OPERATING ANGLE 51

OPERATING ANGLE SENSOR

OPERATING FORCE

PRESSURE SENSOR 52

8a FAST CONTROL CABLE

80

8b SECOND CONTROL CABLE

200 ASSIST ACTUATOR 9

SHIFT POSITION SENSOR

REDUCTION GEARS

15

M

18 THIRD CONTROL CABLE

300 MODE SHIFT UNIT

SECOND MOTOR TORQUE CALCULATING PART 37

41 TARGET POSITION VARIATION SETTING PART

FAST MOTOR TORQUE CALCULATING PART 39

38

MOTOR DRIVE CONTROL PART 45

22

DATA LEARNING PART 40

34 ACTUAL POSITION VARIATION COMPUTING PART

CONTROL UNIT

EP 1 598 577 A2

# FIG. 14

```
        ( START )
            │
            ▼
    ┌──────────────────┐
    │  READ A_OP       │─── S21
    └──────────────────┘
            │
            ▼
    ┌──────────────────┐
    │  READ A_SP       │─── S22
    └──────────────────┘
            │
            ▼
    ┌──────────────────┐
    │  READ P_K        │─── S23
    └──────────────────┘
            │
            ▼
    ┌──────────────────┐
    │  COMPUTE V_A     │─── S24
    └──────────────────┘
            │
            ▼
    ┌──────────────────┐
    │  CORRECT DATA    │─── S25
    └──────────────────┘
            │
            ▼
    ┌──────────────────┐
    │  SET V_T         │─── S26
    └──────────────────┘
            │
            ▼
    ┌──────────────────┐
    │  CALCULATE T_M1  │─── S27
    └──────────────────┘
            │
            ▼
    ┌──────────────────┐
    │  CALCULATE T_M2  │─── S28
    └──────────────────┘
            │
            ▼
    ┌──────────────────┐
    │  CALCULATE T_M   │─── S29
    └──────────────────┘
            │
            ▼
    ┌──────────────────┐
    │  DRIVE MOTOR     │─── S30
    └──────────────────┘
            │
            ▼
        ( END )
```

FIG. 15

hand off

## FIG. 16

EP 1 598 577 A2

# FIG. 17

S15

↓

| CALCULATE $V_{OP}$ | — S31 |

↓

| CALCULATE $T_{MB}$ | — S32 |

↓

| CALCULATE $T_{MC}$ | — S33 |

↓

| ALCULATE $T_{M2}$ | — S34 |

↓

S17